Europäisches Patentamt

European Patent Office

Office européen des brevets

(11) Publication number: **0 371 797**
**A2**

# (12) EUROPEAN PATENT APPLICATION

(21) Application number: **89312479.2**

(22) Date of filing: **30.11.89**

(51) Int. Cl.5: **G02F 1/1347**

(30) Priority: **30.11.88 JP 304957/88**

(43) Date of publication of application:
**06.06.90 Bulletin 90/23**

(84) Designated Contracting States:
**DE GB**

(71) Applicant: **SHARP KABUSHIKI KAISHA**
**22-22 Nagaike-cho Abeno-ku**
**Osaka 545(JP)**

(72) Inventor: **Funada, Fumiaki**
**33-10 Izumihara-cho**
**Yamatokoriyama-shi Nara-ken(JP)**
Inventor: **Kozaki, Shyuichi**
**1-2-51-303, Ukyo 2-chome**
**Nara-shi Nara-ken(JP)**

(74) Representative: **Brown, Kenneth Richard et al**
**R.G.C. Jenkins & Co. 26 Caxton Street**
**London SW1H 0RJ(GB)**

(54) **Liquid crystal display device.**

(57) A liquid crystal display device which comprises a display liquid crystal element including a first liquid crystal layer sandwiched between first and second transparent substrates; an optically compensator including a second liquid crystal layer sandwiched between third and fourth transparent substrates and twisted in a direction counter to the direction in which the first liquid crystal layer is twisted; and a polarizing member arranged on one side of the first liquid crystal layer remote from the second liquid crystal layer and also on one side of the second liquid crystal layer remote from the first liquid crystal layer. The polarizing direction of each of the polarizing members, the direction in which each of the display liquid crystal element and the compensating liquid crystal element is oriented and the extent of twist of each of the first and second liquid crystal layers are so selected that, so long as no driving signal is applied between electrodes in the display liquid crystal element, light can be intercepted.

Fig. 1

## BACKGROUND OF THE INVENTION

(Field of the Invention)

The present invention relates to a liquid crystal display device suited for use as a display device in a television receiver set and a video tape recorder.

(Description of the Prior Art)

A liquid crystal display device of an active matrix drive system is well known in the art, which comprises a light transmissive insulating substrate, such as a plate glass, on which thin film transistors and switching elements are formed in a matrix fashion, and an electrode substrate on which bus lines such as signal lines, scanning lines and signal accumulating capacitive wirings are formed. This type of liquid crystal display device had some advantages in that the liquid crystal material used therein has a high speed of response, in that no limitation is imposed on the area of surface of the transparent insulating substrates used as the electrode substrates and in that the liquid crystal display device can be used in any one of reflective and transmissive modes. Because of these advantages, the liquid crystal display device of active matrix drive system is widely used as a display device in a pocketable television receiver set and a video tape recorder.

According to the prior art, for this type of liquid crystal display device a twisted nematic liquid crystal display device is generally employed wherein a liquid crystal cell comprising a pair of electrode substrates and a liquid crystal layer made up of nematic liquid crystal molecules filled in a gap between the paired electrode substrates while twisted 90° is employed. The twisted nematic liquid crystal display system can be divided into two subsystems depending on the arrangement of a pair of polarizing filters used to sandwich the liquid crystal cell; a normally black subsystem and a normally white subsystem. In the normally black subsystem, the polarizing filters are arranged so that the liquid crystal display device can exhibit a non-emissive mode, in which a white image against a dark background is formed, so long as no voltage is applied across the liquid crystal layer in the liquid crystal cell. On the other hand, in the normally white subsystem, the polarizing filters are arranged so that the liquid crystal display device can exhibit an emissive mode, in which a dark image against a white background is formed, so long as no voltage is applied across the liquid crystal layer in the liquid crystal cell.

More specifically, where the liquid crystal cell is employed only in one layer structure, the normally black subsystem is such that the polarizing filters are arranged with their respective polarizing axes extending parallel to each other, whereas the normally white subsystem is such that the polarizing filters are arranged with their respective polarizing axes extending perpendicular to each other.

However, the prior art twisted nematic liquid crystal display device has a disadvantage in that the display contrast is very low, a major cause of which lies in the wavelength dispersing effect resulting from the optical rotatory power based on the orientation of the twisted nematic liquid crystal. See F. Gharadjedaghi and J. Robert: Rev. de Phys. Appl. 10 Mar. p.69 (1975).

In other words, in the twisted nematic liquid crystal, an interference color tends to occur as a result of cumulative effects of change in rotatory power with wavelength of light and birefringence of the liquid crystal, lowering the display contrast. A coloring of the displayed image attributable to the interference color has a correlation with the field dependency of the display contrast; the smaller the retardation $\Delta n \cdot d$ (wherein $\Delta n$ represents the birefringence of the liquid crystal and d represents the thickness of the liquid crystal layer), the more is the field dependency improved. However, the smaller retardation brings about a considerable coloring effect. In view of this, the following two attempts have hitherto been made to suppress the coloring phenomenon and to improve the field dependency.

The first attempt is generally called a multi-gap system wherein, in a color liquid crystal display device, red, green and blue color filters overlaying associated pixels in the liquid crystal cell have their thickness varied to vary the respective thicknesses of the liquid crystal layers in the associated pixels, such as suggested by S. Nagata et al in SID Sym. Digest, p.84 (1985). This first attempt, however, has a problem in that it is not easy to manufacture the color filters each having a precisely regulated thickness without inviting an increase in manufacturing cost.

The second attempt is generally called a normally white system wherein, even though the coloring phenomenon occurs, the coloring is made unnoticeable such as suggested by Funata et al in a bulletin of TV Society, the issue of October, 1988, No. 42. According to this second attempt, in the case of the liquid crystal display device of active

2

matrix drive system, the failure of even one of the switching elements, such as thin film transistors formed on the electrode substrate, to operate brings about a problem in that one of the pixels which is associated with such one of the switching elements will be perceived as a bright dot against the background at all times. Accordingly, depending on the type of displayed image, the bright dot will be considerably noticeable to such an extent as to result in a reduction in display quality as a whole. To alleviate this problem requires the removal of the electrode substrate having the failing switching element from the system as a defective element, eventually bringing about a reduction in yield of the products. In view of the foregoing, the use of the normally black system is desirable in the liquid crystal display device of active matrix type, however, the normally black system is susceptible to the coloring phenomenon when in non-emissive state (black display).

## SUMMARY OF THE INVENTION

Accordingly, the present invention is intended to provide an improved liquid crystal display device wherein light passing through display liquid crystal elements can be completely shielded, so long as no driving signal is applied, to enhance the contrast thereby to improve the display quality.

In order to accomplish the above described object, the present invention provides an improved liquid crystal display device which comprises a display liquid crystal element including first and second transparent substrates each having transparent electrodes formed thereon and a first liquid crystal layer sandwiched between the first and second transparent substrates; an optically compensating liquid crystal element including third and fourth transparent substrates and a second liquid crystal layer sandwiched between the third and fourth transparent substrates and twisted in a direction counter to the direction in which the first liquid crystal layer is twisted; and a polarizing member arranged on one side of the first liquid crystal layer remote from the second liquid crystal layer and also on one side of the second liquid crystal layer remote from the first liquid crystal layer.

In accordance with the present invention, the polarizing direction of each of the polarizing members, the direction in which each of the display liquid crystal element and the compensating liquid crystal element is oriented and the extent of twist of each of the first and second liquid crystal layers are so selected that, so long as no driving signal is applied between electrodes in the display liquid crystal element, light can be intercepted.

According to the present invention, the liquid crystal display device is provided with the optically compensating liquid crystal element including third and fourth transparent substrates and a second liquid crystal layer sandwiched between the third and fourth transparent substrates and twisted in a direction counter to the direction in which the first liquid crystal layer is twisted. In the liquid crystal display device of this specific construction, the polarizing direction of each of the polarizing members, the direction in which each of the display liquid crystal element and the compensating liquid crystal element is oriented and the extent of twist of each of the first and second liquid crystal layers are so selected that, so long as no driving signal is applied between electrodes in the display liquid crystal element, light can be intercepted. Specifically, in a condition during which no driving signal is applied, linearly polarized light emerging from the polarizing member arranged on one side of the display liquid crystal element remote from the compensating liquid crystal element is passed through the first liquid crystal layer in the display liquid crystal element while optically rotated according to the extent of twist of the first liquid crystal layer in the display liquid crystal element and is subse quently passed through the second liquid crystal layer in the compensating liquid crystal element while optically rotated in a direction counter to the direction in which the linearly polarized light has been rotated during the passage thereof through the first liquid crystal layer. The linearly polarized light emerging from the second liquid crystal layer is intercepted by the polarizing member arranged on one side of the compensating liquid crystal element remote from the display liquid crystal element.

The linearly polarized light incident upon the display liquid crystal element is converted into an elliptically polarized light as it passes through the display liquid crystal element. However, this deformation can be compensated for by the liquid crystal layer in the optically compensating liquid crystal element as it subsequently passes therethrough to resume the linearly polarized light. Accordingly, during the period in which no driving signal is applied, light associated with the previously discussed interference color will not pass through the polarizing member arranged on one side of the compensating liquid crystal element remote from the display liquid crystal element and can be completely intercepted.

## BRIEF DESCRIPTION OF THE DRAWINGS

Fig. 1 is a schematic exploded sectional view of a liquid crystal display device according to a preferred embodiment of the present invention;

Figs. 2(a) and 2(b) are schematic diagrams used to explain the operation of the liquid crystal display device of Fig. 1;

Fig. 3 is a graph showing the relationship between the light transmissivity and the applied voltage, exhibited by the liquid crystal display device; and

Fig. 4 is a graph showing the relationship between the light transmissivity and the applied voltage, exhibited by the liquid crystal display device.

## DETAILED DESCRIPTION OF THE PREFERRED EMBODIMENT

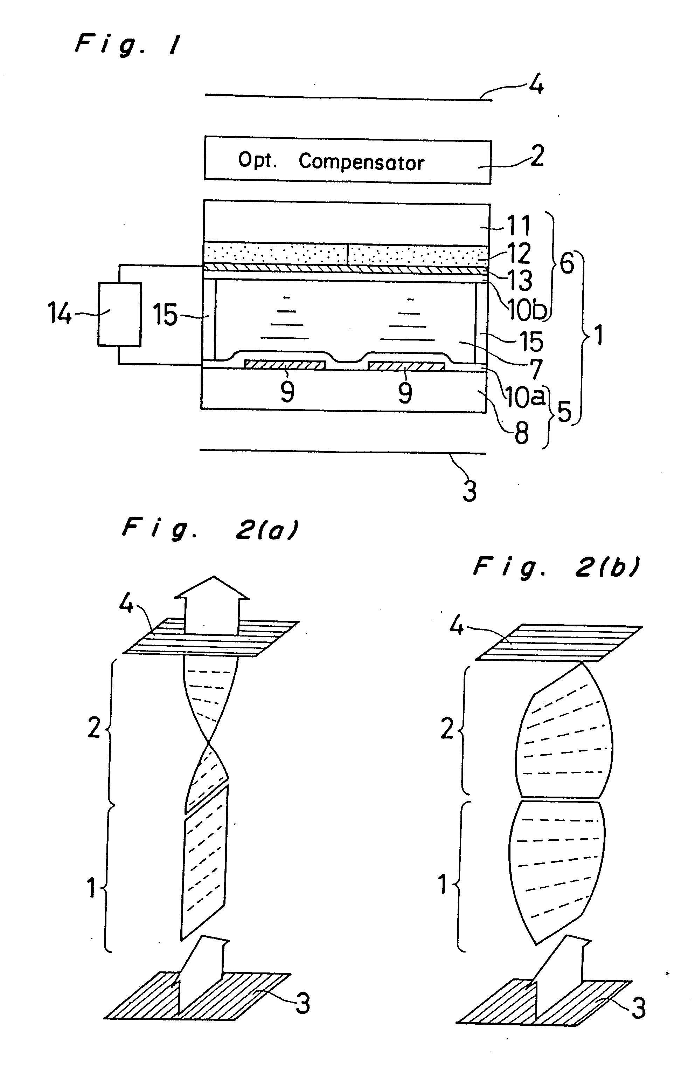

Fig. 1 illustrates an exploded sectional view of a liquid crystal display device according to one embodiment of the present invention. In this figure, a display liquid crystal cell 1 is comprised of a twisted nematic liquid crystal layer 7 sandwiched between a display electrode substrate 5 and a counter-electrode substrate 6. The display electrode substrate 5 is of an active matrix drive system and includes a transparent insulating plate 8 made of glass or quartz having no birefringence, said transparent insulating plate 8 having one surface formed with bus lines including signal lines and scanning lines and also with a matrix of transparent pixel electrodes 9 and associated switching elements. The transparent insulating plate 8 is covered by an orientation layer 10a overlaying the pixel electrodes 9 and the other constituent elements to complete the display electrode substrate 5.

Each of the switching elements formed on the surface of the transparent insulating plate 8 may be a-Si TFT (thin film transistor), P-Si TFT, a-Si PIN diode, $Ta_2O_5$ MIM diode or $SiN_x$ diode.

The counter-electrode substrate 6 is comprised of a transparent insulating plate 11 made of glass or quarts having no birefringence and having one surface formed with red, green and blue color filters 12 of high light transmissivity arranged so as to confront the associated pixel electrodes 9 on the display electrode substrate 5. The transparent insulating plate 11 is covered by an orientation layer 10b overlaying the color filters 12 through counter-electrodes 13, thereby completing the counter-electrode substrate 6.

Both of the pixel electrodes 9 and the counter-.electrodes 13 are transparent electrodes used for applying a voltage to the twisted nematic liquid crystal layer 7 and are made of, for example, material of $In_2O_3$ type. A drive circuit 14 for supplying the voltage are connected between those electrodes as shown.

Each of the orientation layers 10a and 10b formed respectively on the display electrode substrate 5 and the counter-electrode substrate 6 is determinative of the orientation in which liquid crystal molecules of the twisted nematic liquid crystal layer 7 are twisted and is made of a polyimide film which has been subjected to the rubbing process. By the action of these orientation layers 10a and 10b, the major axis of the liquid crystal molecule of the twisted nematic liquid crystal layer 7 will be twisted between the display electrode substrate 5 and the counter-electrode substrate 6 within the range of 60 to 120°. However, the twisting angle of 90° is preferred to give a favorable display contrast. In the illustrated instance, the twisted nematic liquid crystal layer 7 has a layer thickness d selected to be 4.5 μm.

Each color filter 12 on the counter-electrode substrate 6 may be in the form of a dyed gelatine film formed by the use of, for example, an electrodeposition technique or a color ink printing technique. However, in the illustrated embodiment, each color filter 12 is employed in the form of a gelatine filter formed by patterning a gelatine film of about 1 μm in thickness by the use of a photolithographic technique and dying in one of three primary colors, which may be available from Toppan Printing Co., Ltd. of Japan.

The twisted nematic liquid crystal layer 7 is sealed in position between the substrates 5 and 6 by means of a sealant 15 so designed and so chosen as to render the twisted nematic liquid crystal layer 7 to have the predetermined layer thickness d.

An optical compensating liquid crystal cell 2, hereinafter referred to as an optical compensator, for compensating for a rotatory dispersion effect produced in the display liquid crystal cell 1 is placed on one of the opposite surfaces of the display liquid crystal cell 1 adjacent the color filters 12. This optical compensator 2 is comprised of a liquid crystal layer having the same retardation Δn•d as that of the twisted nematic liquid crystal layer 7 in the display liquid crystal cell 1 and also having a twisted structure in which the direction of twist is counter to the direction of twist of the twisted nematic liquid crystal layer 7. This optical compensator 2 is so disposed on one surface of the display liquid crystal cell 1 that the major axis of the liquid crystal molecule in the display liquid crystal cell 1 and that of the liquid crystal molecule in the optical compensator 2 which is closest thereto can extend perpendicular to each other.

The liquid crystal material for the optical compensator 2 may be a nematic liquid crystal, a cholesteric liquid crystal or a smectic liquid crystal, however, the use is preferred of the nematic liquid crystal which is commercially available in the market and identified by a trade name "ZL1-3021-000" manufactured and sold by Merck & Co., Inc., (Birefringence $\Delta n = 0.09$; Layer Thickness $d = 4.5$ $\mu$m).

A first polarizing filter 3 is overlaid on the other of the opposite surfaces of the display liquid crystal cell 1 remote from the optical compensator 2, having its polarizing axis extending parallel to the direction of the major axis of the liquid crystal molecule of the display liquid crystal cell 1 which is closest to such liquid crystal molecule. Also, a second polarizing filter 4 is overlaid on one surface of the optical compensator 2 opposite to the display liquid crystal cell 1, having its polarizing axis extending parallel to the direction of the major axis of the liquid crystal molecule of the optical compensator 2 which is closest to such liquid crystal molecule.

The first and second polarizing filters 3 and 4 are so arranged and so positioned relative to the liquid crystal cell 1 that their polarizing axes can be displaced 90° from each other. Each of these first and second polarizing filters 3 and 4 may be a polarizing filter of either polyene system or iodine system and, in the practice of the present invention, a polarizing filter manufactured and sold by Sanritsu Denki Mfg. of Japan is employed for each of the first and second polarizing filters 3 and 4.

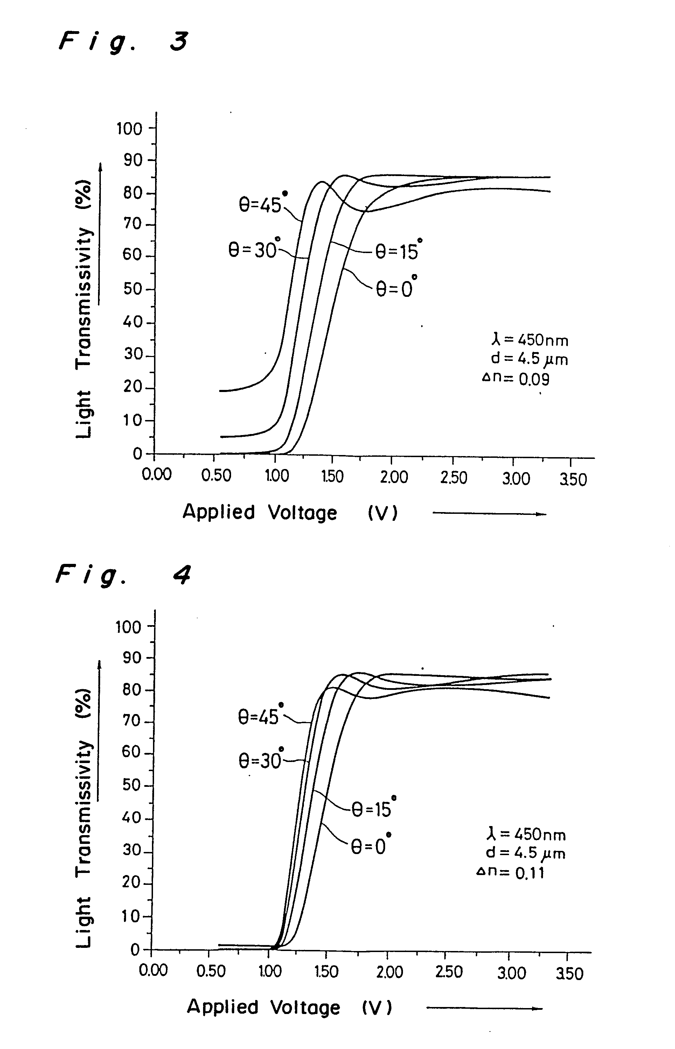

Fig. 2 illustrates, in a diagrammatic representation, the manner in which light passes through the liquid crystal display device of the above described construction, and Fig. 3 illustrates a characteristic graph showing the relationship between the light transmissivity and the applied voltage exhibited by the liquid crystal display device of the above described construction when the light has a wavelength $\lambda$ of 450 nm.

Hereinafter, the operation of the liquid crystal display device of the above described construction will be described with particular reference to Fig. 2.

When a voltage is applied from the drive circuit 14 to a selected portion of the display liquid crystal cell 1, that is, a portion of the twisted nematic liquid crystal layer 7 sandwiched between the pixel electrode 9 and the counter-electrode 13, that portion of the liquid crystal layer 7 is relieved from a twisted state.

In such case, as shown in Fig. 2(a), light incident on the liquid crystal display device 1 from the side of the first polarizing filter 3 passes through the display liquid crystal cell 1. The light having passed through the display liquid crystal cell 1 subsequently enters the optical compensator 2 and is twisted 90° during its passage through the optical compensator 2. Accordingly, the light emerging outwardly from the optical compensator 2 is rotated 90° relative to that entering the display liquid crystal cell 1.

Since as hereinbefore described the first and second polarizing filters 3 and 4 are so arranged and so positioned relative to each other with their respective polarizing axes displaced 90° from each other, the light having passed through the optical compensator 2 passes through the second polarizing filter 4. Thus, the light passes through the selected pixel portion so that the color of the color filter 12 disposed in alignment with such selected pixel portion can be illuminated.

On the other hand, pixel portions of the twisted nematic liquid crystal layer 7 in the display liquid crystal cell which have not been applied with a voltage are retained in the twisted state. In such case, as shown in Fig. 2(b), light incident on the liquid crystal display device from the side of the first polarizing filter passes through the twisted nematic liquid crystal layer 7 while rotated. At this time, the light passing through the twisted nematic liquid crystal layer 7 is twisted 90° and, at the same time, polarized into an elliptically polarized light due to the birefringence of the liquid crystal layer 7, having been separated into normal and abnormal light components. Since at this time, the respective directions of the major axes of the neighboring liquid crystal molecules of the display liquid crystal cell 1 and of the optical compensator 2 are perpendicular to each other, the normal light having passed through the display liquid crystal cell 1 enters the optical compensator 2 as an abnormal light while the abnormal light having passed through the display liquid crystal cell 1 enters the optical compensator 2 as a normal light.

The light entering the optical compensator 2 is twisted 90° in a direction counter to that passing through the display liquid crystal cell 1 and, at the same time, the elliptically polarized light is transformed into a linearly polarized light. Accordingly, the elliptically polarized light twisted 90° through the display liquid crystal cell 1 is again twisted 90° by the optical compensator 2 to resume the linearly polarized light. Also, since the first and second polarized filters 3 and 4 are so positioned with their polarizing axes displaced 90° with respect to each other as hereinbefore described, the light having passed through the optical compensator 2 in the manner as hereinbefore described can be intercepted by the second polarizing filter 4. Moreover, the light transformed into the linearly polarized light by the optical compensator 2 will not leak from the second polarizing filter 2 and provides a black display free from coloring. In this ways a display image based on the black display free from coloring can be obtained in the normally black system with the image contrast enhanced consequently.

Fig. 3 showing the relationship between the light transmissivity and the applied voltage makes it clear that the light transmissivity at a low applied voltage region (the region in which the applied voltage is lower than a threshold value) is considerably lowered, giving a highly enhanced contrast. In Fig. 3, $\theta$ represents the angle of field of view in a direction normal to the surface of the liquid crystal cell, and it will readily be seen that characteristics exhibited at $\theta = 0°$, $\theta = 15°$, $\theta = 30°$ and $\theta = 45°$, respectively, show the achievement of the highly enhanced contrast in the display.

Fig. 4 illustrates the relationship between the light transmissivity and the applied voltage exhibited by the liquid crystal display device according to the embodiment of the present invention at 450 nm in wavelength $\lambda$.

In the liquid crystal display device in the illustrated embodiment of the present invention, the display liquid crystal cell 1 and the optical compensator 2 are so arranged and so positioned that the direction of the major axis of the liquid crystal molecule in the liquid crystal cell 1 and that in the optical compensator 2 closest to such liquid crystal molecule in the liquid crystal cell 1 can lie perpendicular to each other. However, as an alternative embodiment of the present invention, they may be so arranged and so positioned that the major axis of the liquid crystal molecule in the liquid crystal cell 1 and that in the optical compensator 2 can lie parallel to each other, provided that predetermined conditions are satisfied. This alternative embodiment may differ from the foregoing embodiment in that the first polarizing filter 3 is so positioned as to have its polarizing axis lying perpendicular to the major axis of the liquid crystal molecule of the display liquid crystal cell 1 adjacent thereto. Also, the twisted nematic liquid crystal layer 7 in the display liquid crystal cell 1 and the liquid crystal layer in the optical compensator 2 may have the same retardation which may be selected within the range of 0.36 to 0.55 $\mu$m, preferably 0.495 $\mu$m. In the practice of the present invention, the liquid crystal therefor may be the one available in the market and identified by a trade name "ZL1-3092-000" manufactured and sold by Merck & Co., Inc., (Birefringence $\Delta$n = 0.11; Layer Thickness d = 4.5 $\mu$m). The structure other than that described above is substantially identical with that according to the foregoing embodiment and, therefore, the details thereof will not be reiterated for the sake of brevity.

As shown in Fig. 4, even in the alternative embodiment of the present invention, it is clear that the light transmissivity at a low applied voltage region (the region in which the applied voltage is lower than a threshold value) is considerably lowered, giving a highly enhanced contrast. In Fig. 4, $\theta$ represents the angle of field of view in a direction normal to the surface of the liquid crystal cell, and it will readily be seen that characteristics exhibited at $\theta = 0°$, $\theta = 15°$, $\theta = 30°$ and $\theta = 45°$, respectively, show the achievement of the highly enhanced contrast in the display.

Since the liquid crystal display device according to the present invention can exhibit such characteristics as hereinbefore discussed, the following advantages can be appreciated.

(1) It can be used as a display element having a low retardation ($\Delta$n$\cdot$d < 1 $\mu$n) in which the field dependency of the display contrast is low. Since the response time $\varsigma$ is expressed by $\varsigma \propto d^2$ with respect to the set-up and set-down of the response, this is particularly advantageous in that a thin display element excellent in high speed response can be obtained.

(2) Even in the display element having a low retardation, no coloring occur in the black display and, therefore, a favorable color reproducibility can be obtained.

(3) Since the display takes place according to the normally black system, no defect can be perceived at the display electrode substrate 5.

(4) The display according to the normally black system can provide a higher display contrast than 50:1.

(5) Inexpensive color filters 12 of primary colors can be employed in the practice of the present invention.

As hereinbefore fully described, the light passing through the display liquid crystal element can be completely intercepted so long as no drive signal is applied, the contrast can be advantageously enhanced with the display quality consequently improved.

Although the present invention has been fully described in connection with the preferred embodiment thereof with reference to the accompanying drawings, it is to be noted that various changes and modifications are apparent to those skilled in the art. By way of example, although the system has been described wherein external light enter from the side of the first polarizing filter 3, the light may enter through the system from the side of the second polarizing filter 4.

The invention being thus described, it will be obvious that the same may be varied in many ways. Such variations are not to be regarded as a departure from the scope of the invention.

There are described above novel features which the skilled man will appreciate give rise to advantages. These are each independent aspects of the invent ion to be covered by the present application, irrespective of whether or not they are included within the scope of the following claims.

## Claims

1. A liquid crystal display device which comprises:

a display liquid crystal element including first and second transparent substrates each having transparent electrodes formed thereon and a first liquid crystal layer sandwiched between the first and second transparent substrates;

an optically compensating liquid crystal element including third and fourth transparent substrates and a second liquid crystal layer sandwiched between the third and fourth transparent substrates and twisted in a direction counter to the direction in which the first liquid crystal layer is twisted; and

a polarizing member arranged on one side of the first liquid crystal layer remote from the second liquid crystal layer and also on one side of the second liquid crystal layer remote from the first liquid crystal layer;

the polarizing direction of each of the polarizing members, the direction in which each of the display liquid crystal element and the compensating liquid crystal element is oriented and the extent of twist of each of the first and second liquid crystal layers being so selected that, so long as no driving signal is applied between electrodes in the display liquid crystal element, light can be intercepted.

2. A liquid crystal display device comprising:

a first liquid crystal cell layer between a pair of electrode substrates whereby driving signals can be applied to said liquid crystal cells, the liquid crystal cell layer being such as to rotate light in a first direction when no driving signal is applied;

a second liquid crystal cell layer stacked on the first and being such as to rotate light in a second direction opposite to the first; and

a pair of polarizing filter elements sandwiching the first and second liquid crystal cell layers, the arrangement being such that when no driving signals are applied light does not pass through the device.

3. A liquid crystal display device comprising a first liquid crystal cell which is controllable by drive signals applied thereto, and a second liquid crystal cell superposed on the first cell and having an opposite direction of twist to that of the first cell so that in use adverse optical affects associated with the first cell are at least partly counteracted by the effect of the second cell.

4. A liquid crystal display device according to claim 3 wherein the superposed cells are disposed between first and second polarizing elements and wherein when the first cell receives no said drive signals, the device blocks the passage of light therethrough

Fig. 1

Opt. Compensator

Fig. 2(a)

Fig. 2(b)

# F i g .  3

Graph: Light Transmissivity (%) vs Applied Voltage (V)

Curves labeled θ=45°, θ=30°, θ=15°, θ=0°

λ = 450nm
d = 4.5 μm
Δn = 0.09

# F i g .  4

Graph: Light Transmissivity (%) vs Applied Voltage (V)

Curves labeled θ=45°, θ=30°, θ=15°, θ=0°

λ = 450nm
d = 4.5 μm
Δn = 0.11